Europäisches Patentamt

European Patent Office

Office européen des brevets

(11) Publication number: **0 034 807**
**B1**

## EUROPEAN PATENT SPECIFICATION

(45) Date of publication of patent specification: **13.02.85**

(21) Application number: **81101182.4**

(22) Date of filing: **19.02.81**

(51) Int. Cl.⁴: **G 01 L 1/18, G 01 L 9/06,**
**H 01 L 29/84**

(54) Semiconductor strain gauge.

(30) Priority: **22.02.80 JP 20440/80**

(43) Date of publication of application:
**02.09.81 Bulletin 81/35**

(45) Publication of the grant of the patent:
**13.02.85 Bulletin 85/07**

(84) Designated Contracting States:
**DE FR GB**

(56) References cited:
**DE-A-2 841 312**
**GB-A-2 012 967**
**US-A-3 654 545**
**US-A-3 697 918**
**US-A-4 205 556**

**Patents Abstracts of Japan Vol. 1, No. 129, 25
October 1977 page 5724E77**

(73) Proprietor: **Hitachi, Ltd.**
**5-1, Marunouchi 1-chome**
**Chiyoda-ku Tokyo 100 (JP)**

(72) Inventor: **Yamada, Kazuji**
**1-36-3-205, Nishinarusawa**
**Hitachi Ibaraki (JP)**
Inventor: **Sato, Hideo**
**161-524, Ishinazaka**
**Hitachi Ibaraki (JP)**
Inventor: **Suzuki, Seiko**
**3705, Kanai**
**Hitachi-ohta Ibaraki (JP)**
Inventor: **Kobayashi, Ryoichi**
**3128, Higashi-ishikawa Saikochi**
**Katsuta Ibaraki (JP)**
Inventor: **Nishihara, Motohisa**
**1166-22, Inada**
**Katsuta Ibaraki (JP)**

(74) Representative: **Beetz, sen., Richard, Dipl.-Ing.**
**Patentanwälte Dipl.-Ing. R. Beetz sen. Dipl.-Ing.**
**K. Lamprecht,Dr.Ing. R. Beetz jr. et al**
**Rechtsanwalt Dipl.-Phys. Dr. jur. U. Heidrich,**
**Dr.-Ing. W. Timpe Dipl.-Ing. J. Siegfried Priv.-**
**Doz. Dipl.-Chem. Dr.rer.nat. W. Schmitt-Fumian**
**Steinsdorfstrasse 10 D-8000 München 22 (DE)**

Courier Press, Leamington Spa, England.

**0 034 807**

## Description

The present invention relates to a semiconductor strain gauge and to a strain measuring device having means to carry out zero-point temperature compensation.

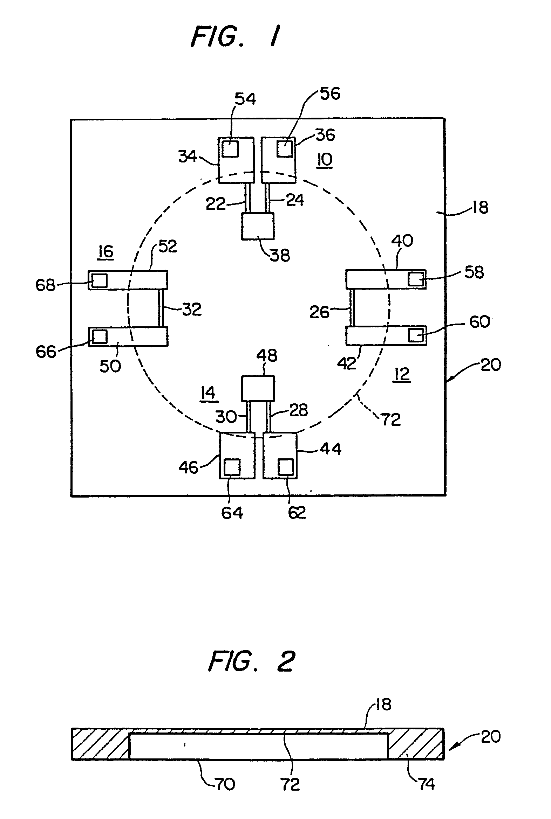

US—A—3 697 918 discloses a semiconductor strain gauge (Fig. 1) containing the features of the preamble of the present Claim 1.

GB—A—2 012 967 discloses a zero-point temperature compensation circuit of a strain measuring device. This semiconductor pressure detector apparatus has a strain-electrical signal conversion bridge which is composed of four semiconductor strain gauges in the form of semiconductor resistors 2 to 5, which are formed in substantially the same impurity profile, and an amplifier which serves to hold at a predetermined value the sum of currents flowing through the bridge. The intermediate points c, d of two arms constituting the bridge are respectively connected to the non-inverting and the inverting inputs of a negative feedback amplifier 6. The output of the negative feedback amplifier 6 is applied to another end of the bridge as well as to the input of a further amplifier stage 22.

A potential equal to potentials which appear at the intermediate points of the two arms of the bridge when the bridge is in its balanced state at a predetermined temperature and under a predetermined pressure is generated by two resistors 29 and 30 which are connected in series with a supply voltage and the potential is applied through a switch 33 to either of the noninverting or the inverting inputs of the negative feedback amplifier, whereby the zero-point temperature compensation of the detector device is made.

Although all the resistance values of the four resistors 2—5 of the bridge are made equal in design, it is difficult to make them perfectly equal by the diffusion process, and deviations or loss occur depending upon this diffusion process. Therefore, the bridge output at the null pressure, i.e., the zero-point becomes somewhat different upon this diffusion process. With the variation of temperature the zero-point varies substantially according to the temperature coefficients of the respective resistors 2—5. This is known to be conspicuous especially in case of constant current excitation. Since in the known prior art semiconductor strain gauge the respective resistors 2—5 are formed in one sort of impurity profile, all the resistors have the same temperature coefficient. For this reason, in case where the zero-point is positive at a reference temperature (for example 20°C), the zero-point variation attendant upon the temperature variation becomes a positive gradient, whereas in case where the zero-point is negative at a reference temperature, the zero-point variation attendant upon the temperature variation becomes a negative gradient. That is, in the known semiconductor strain gauge detector apparatus the gradient of the zero-point variation differs depending upon the sign of the zero-point.

A semiconductor strain gauge utilizing a strain gauge diaphragm as the pressure-sensitive element is known from JP—A—52 63083. In the known strain gauge a flexible diaphragm is formed in a semiconductor substrate such as silicon. Two strain gauge piezo-resistive elements are integrally formed on two diaphragms by diffusion process and arranged to provide a difference between electric outputs due to the surface strain of the diaphragms. The resistance of the elements are maintained equal by its temperature compensation.

The temperature-characteristics of their outputs become positive or negative due to deviations of the diffusion process.

US—A—3 654 545 discloses a semiconductor strain gauge amplifier which includes a temperature sensor such as thermistor in order to realize a zero-point temperature compensation. Such compensation circuit, however, is complicated disadvantageously.

It is therefore an object of the present invention to provide a semiconductor strain gauge which exhibits a unidirectional gradient of the temperature characteristics of its output signal and a zero-point temperature compensated strain measuring device using the semiconductor strain gauge, the strain measuring device having a zero-point temperature compensation circuit of simple structure and whose output does not vary even when the ambient temperature has changed.

The invention is defined in claims 1 and 4. Embodiments of the strain gauge are defined in claims 2 and 3.

Fig. 1 is a plan view of the preferred embodiment of a semiconductor pressure sensor according to the present invention.

Fig. 2 is a cross-sectional side view along the line II—II of fig. 1.

Fig. 3 is a circuit diagram showing the strain measuring device according to the present invention.

Fig. 4 is a graph explaining the temperature compensation.

In Figs. 1 and 2, four strain gauge elements or resistances 10, 12, 14, and 16 are formed in a major surface 18 of a substrate 20 by diffusion process. The respective gauge elements 10, 12, 14, and 16 are composed of low impurity concentration piezoresistive portions 22, 24, 26, 28, 30 and 32 and high impurity concentration piezoresistive portions or high-doped diffusion resistance portions 34, 36, 38, 40, 42, 44, 46, 48, 50 and 52. In general, a silicon substrate of N type conductivity is used as the substrate 20 and the elements of P type conductivity 10, 12, 14 and 16 are formed by diffusing an impurity into the semiconductor substrate 20. Since the impurity concentration of the piezoresistive portions 34, 36, 38, 40, 42, 44, 46, 48, 50 and 52 is higher than that of the piezoresistive portions 22, 24, 26, 28, 30 and 32, the temperature coefficient of the low impurity concentration piezoresistive portions 22, 24, 26, 28, 30 and 32 is greater than that of the high-doped diffused resistance portions 34, 36, 38, 40, 42, 44, 46, 48, 50 and 52.

Contact portions 54, 56, 58, 60, 62, 64, 66 and 68 are disposed in the high-doped diffused resistance portions 34, 36, 40, 42, 44, 46, 50 and 52 respectively. Therefore, the low impurity concentration portions and the high-doped portions are connected in series between contacts.

The resistance values $R_1$, $R_3$ of the resistance portions 22, 24 and 28, 30 ($R_1$: resultant resistance of portions 22, 24; $R_3$: resultant resistance of the portions 28, 30) confronted with each other are greater than the resistance values $R_2$, $R_4$ of the resistance portions 26, 32.

The resistance values $r_1$, $r_3$ of the high-doped diffusion portions 34, 36, 38 and 44, 46, 48 ($r_1$: resultant resistance of the portions 34, 36, 38; $r_3$: resultant resistance of the portions 44, 46, 48) are smaller than the resistance values $r_2$, $r_4$ of the resistance portions 40, 42 and 50, 52 ($r_2$: resultant resistance of the portions 40 and 42; $r_4$: resultant resistance of portions 50, 52).

The resistance values $R_{11}$, $R_{12}$, $R_{31}$ and $R_{41}$ of the gauge elements 10, 12, 14, 16 as viewed from the respective contact portions 54, 56, 58, 60, 62, 64 and 66, 68 (series resistance values of the low impurity concentration portion and high-doped diffusion portion) are formed substantially equal.

A surface 70 opposite to the major surface 18 is etched or machined, and the substrate 20 is formed with a diaphragm 72 in an area including the respective resistors and with a fixing portion 74 for fixing the substrate 20 to another object in a peripheral part outside the diaphragm 72.

When the semiconductor strain gauge of such structure is subjected to a working force such as pressure, the diaphragm 72 flexes, and the respective resistors 10, 12, 14 and 16 diffused and formed in the major surface 18 corresponding to the diaphragm portion deform and change their resistance values. By deriving the changes of the resistance values as electric signals, the working force such as pressure can be gauged.

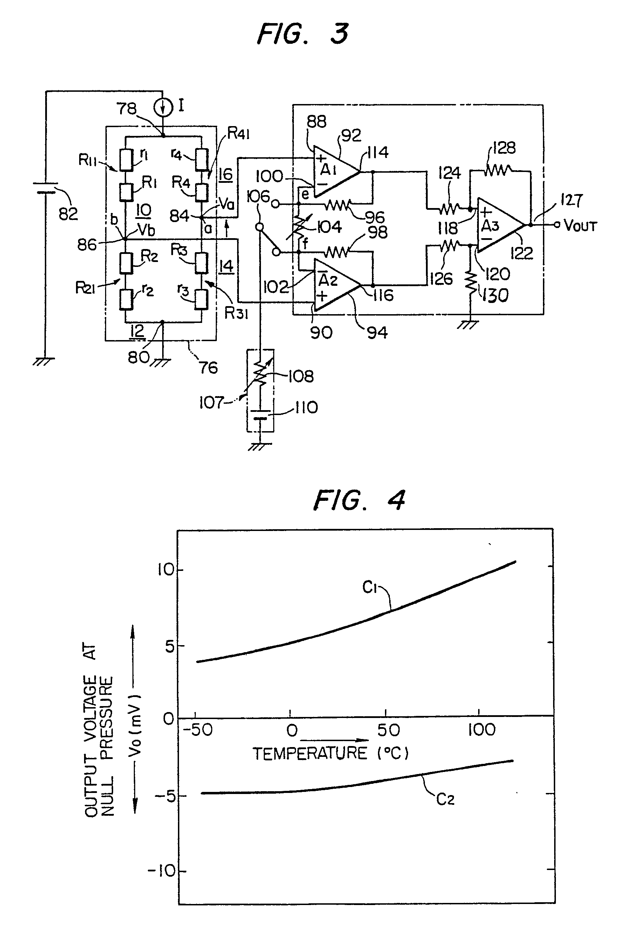

As shown in Fig. 3, the four gauge elements 10, 12, 14 and 16 form a Wheatstone bridge circuit 76. The gauge elements 10 and 14 vary the resistance values $R_{11}$ and $R_{31}$ in the opposite direction to those of the other resistors $R_{21}$ and $R_{41}$. The input terminals 78, 80 of the bridge 76 are connected to a DC source 82 and the output terminals 84, 86 thereof are connected to the positive input terminals 88 and 90 of amplifiers 92 and 94. The sum I of the currents flowing through the resistors 10, 12, 14 and 16 is held at a predetermined value by a reference voltage circuit (not shown).

The amplifiers 92 and 94 are respectively subjected to negative feedback through resistances 96 and 98, and the negative inputs 100 and 102 of the amplifiers 92 and 94 are connected to each other through a resistance 104. Further, either the negative input 100 of the amplifier 92 or the negative input 102 of the amplifier 94 is switched through a switch 106 to a reference potential circuit 107 which consists of a resistance 108 and a DC source 110 connected in series with the resistance 108. The reference potential circuit 107 is adjusted so that it may generate the same potential as that of the output terminals 84 and 86 of the two arms in the state in which the bridge is subjected to a certain specified temperature (e.g., normal temperature of 20°C) and to a certain specified pressure (e.g., zero pressure).

The outputs 114, 116 of the amplifiers 92 and 94 are respectively applied to the positive input 118 and negative input 120 of a differential amplifier 122 through resistances 124 and 126. A feedback resistance 128 is inserted between the output 127 of the differential amplifier 122 and the positive input 124 thereof. The negative input 120 is grounded through a resistance 130.

Now, when a pressure is applied to the semiconductor strain gauges, the resistance values of the semiconductor strain gauge elements 10, 12, 14 and 16 vary in accordance with the magnitude of the pressure, and a difference arises between the potentials of the midpoints a and b (output terminals 84 and 86) of the bridge 76. The midpoint potentials $V_a$, $V_b$ are amplified by the amplifiers 92 and 94, and the difference of the amplified midpoint potentials $V_a$ and $V_b$ is taken by the differential amplifier 122 to obtain the output signal $V_{OUT}$.

The zero-point temperature compensation will now be described. The zero-point temperature compensation is realized in such a way that the reference potential equal to that of the output terminals 84 and 86 of the bridge at a predetermined pressure and at the normal temperature is directly connected to one of the negative inputs 100 or 102 of the amplifiers 92 and 94 through the switch 106 as well as, additionally, to the other of the negative inputs 100, 102 via resistor 104. The sign of the zero-point temperature compensation is determined by the particular contact to which the switch 106 is connected, and the quantity of the compensation is determined by the potential of the reference potential circuit 107.

The amplifiers 92 and 94 are made up of operational amplifiers of high gain, and the outputs of these amplifiers 92 and 94 are connected to the negative inputs 100 and 102 of their own through the respective resistances 96 and 98. Therefore, the potentials of the points e and f are substantially equal to the potentials of the midpoints a and b (output terminals 84, 86) of the bridge.

The resistance value $R_c$ of the variable resistance 108 which determines the quantity of the compensation is evaluated by the following expression:

$$R_c = \frac{R_{96}}{A} \cdot \frac{V_{b'}}{E_{OUT}} \quad (1)$$

where $E_{OUT}$ is the variation of the output $V_{OUT}$ corresponding to temperature change $\Delta T$ before the compensation, A denotes the gain of differential amplifier 122, $R_{96}$ the resistance value of the resistance 96 or 98, and $V_{b'}$ the voltage variation between the points e and f corresponding to a prescribed temperature. $V_{b'}$ is substantially equal to $V_b$ which is the variation of the midpoint voltage $V_a$ of $V_b$ of the bridge corresponding to prescribed temperature change $\Delta T$.

In the individual strain—electric signal conversion apparatuses, the output variations corresponding to the predetermined strain are adjusted by adjusting the variable resistances 104. As apparent from expression (1), the output variation corresponding to the predetermined strain is not influenced by the resistance value of the variable resistance 104. In other words, in the strain measuring apparatus according to the present embodiment, the resistance value $R_c$ of the resistance 108 for the zero-point temperature compensation is not affected by the resistance value of the variable resistance 104 for adjusting the variation of the output.

Hereunder will be described the zero-point temperature compensation of the circuit stated above. It is now assumed by way of example that a rise in the ambient temperature has cast the balance of the bridge, in other words, rendered the potential of the midpoint a of the bridge higher than the potential of the midpoint b. Then both the output voltages of the amplifiers 92 and 94 rise with increases in the resistance values of the gauge element 10, 12, 14 and 16 of the bridge, but the output of the amplifier 92 becomes slightly greater than the output of the amplifier 94. Therefore, if the zero-point temperature compensation circuit for the amplifiers is not disposed, the output signal $V_{OUT}$ of the differential amplifier 122 will be positive. At this time, however, when the switch 106 is connected to point f that is, the reference voltage corresponding to the midpoints of the bridge at the normal temperature and under the zero pressure is connected to the negative input of the amplifier 94, current which is fed-back to this negative input through the resistance 98 is increased. This is because a still greater current flows via the resistance 108 due to the difference between the output voltage of the amplifier 94 and the voltage of the DC source 110. Therefore, the output voltage of the amplifier 94 increases, and the output of the differential amplifier 122 decreases and finally becomes zero. When the signs of the potentials of the midpoints a and b of the bridge have fallen into the opposite relation, the switch 106 is thrown to point e.

In the embodiment as shown in Figs. 1, 2, 3, the zero-point output $V_o$ of the bridge always increases with the temperature rise irrespective of whether its deviation is positive or negative, because the resistance temperature coefficients of the gauge elements 10 and 14 are greater than those of the gauge elements 12 and 16. As illustrated by curves $C_1$ and $C_2$ in Fig. 4, whether the zero point (the bridge output voltage during the null pressure) $V_o$ at the reference temperature (for example, 20°C) is plus or minus, its temperature characteristic can be brought into a gradient in an identical direction.

The gradient of each curve $C_1$ or $C_2$ shown in Fig. 4 (the temperature gradient at the zero point $V_o$) can be arbitrarily selected with the diffusion concentration and the resistance values of the respective gauge elements, so that a characteristic necessary for the zero-point temperature compensation or for flattening the temperature characteristic of the zero-point $V_o$ can be obtained.

With the semiconductor strain gauge of this invention shown in Figs. 1 to 3, when connecting the zero point temperature compensation circuit in Fig. 3, for the position of the switch 106 either the point e or f may be selected, for a predetermined polarity of zero-point voltage $V_o$.

Since only the connecting portion of either the point e or the point f may therefore be disposed, a circuit substrate can be miniaturized and simplified, and simultaneously, the facilitation of the connecting operations and the prevention of mistakes in the operations can be achieved.

**Claims**

1. A semiconductor strain gauge comprising:

a semiconductor substrate (20) of one conductivity type on which a pressure sensitive diaphragm (72) is formed and

two forms of piezoresistive element (10, 12; 14, 16) formed in a major surface (18) of said semiconductor substrate (20) in a peripheral portion of said pressure sensitive diaphragm (72) and having an opposite conductivity type to said conductivity type of the substrate (20), the elements (10, 12; 14, 16) being substantially equal to one another in their overall resistance and including an impurity concentration diffused portion, characterised in that

each said form of piezoresistive element (10, 12; 14, 16) includes a low impurity concentration diffused portion (22, 24; 26, 32; 28, 30) and a high-doped diffused portion (34, 36, 38; 40, 42; 44, 46, 48; 50, 52) connected in series, said low impurity concentration portion having a higher resistance temperature coefficient than that of the high-doped portion, and that the resistance value of the low impurity concentration diffused portion (22, 24; 28, 30) in the one form of said piezoresistive element (10, 14) is higher than that of the low impurity concentration diffuzed portion (26, 32) in the other form of said piezoresistive element (12, 16) and that the resistance value of one high-doped diffused portion (34, 36, 38; 44, 46, 48) in said one form of said piezoresistive element (10, 14) is smaller than that of the high-doped diffused portion (40, 42; 50, 52) in said other form of said piezoresistive element (12, 16) so that the said two forms of piezoresistive element (10, 12; 14, 16) are unequal in their overall resistance temperature coefficient, with the overall resistance temperature coefficient of said one form of piezoresistive element (10, 14) being greater than the overall resistance temperature coefficient of said other form of piezoresistive element (12, 16).

2. A semiconductor strain gauge according to claim 1, characterised in that it comprises four piezoresistive elements, said piezoresistive elements (10, 12, 14, 16) being formed in said major surface (18) of said semiconductor substrate (20) in a peripheral position of said pressure sensitive diaphragm (72) said four elements being coupled together to form an electrical bridge circuit with first (10), second (12), third (14) and fourth (16) arms, each having one of said elements, said first and third arms (10, 14) lying opposite to one another and said second and fourth arms (12, 16) lying opposite to one another and that the resistance of the respective diffused portions of each of said elements in said four arms (10, 12, 14, 16) is set so that all of the arms will have substantially equal resistances, but the resistance temperature coefficient of said first and third arms (10, 14) will be greater than the resistance temperature coefficient of said second and fourth arms (12, 16).

3. A semiconductor strain gauge according to claim 1 or 2, characterised in that said one form of piezoresistive element (10, 14) comprises an U-shaped element having a pair of said low impurity concentration diffused portions (22, 24; 28, 30) coupled together by a high-doped diffused portion (38; 48) and that said other form of piezoresistive element (12, 16) comprises an U-shaped element having a pair of said high-doped diffused portions (40, 42; 50, 52) coupled together by a low impurity concentration diffused portion (26; 32).

4. A strain measuring device comprising a semiconductor strain gauge according to any of claims 1 to 3.

**Revendications**

1. Jauge extensométrique à semiconducteurs comprenant:
un substrat semiconducteur (20) possédant un type de conductivité, sur lequel un diaphragme (72) sensible à la pression est formé, et

deux formes d'éléments piézorésistifs (10, 12; 14, 16) formés dans une surface principale (18) dudit substrat semiconducteur (20) dans une partie périphérique dudit diaphragme (72) sensible à la pression, et possédant un type de conductivité opposé au type de conductivité du substrat (20), les éléments (10, 12; 14, 16) étant sensiblement identiques entre eux en ce que concerne leur résistance globale et comportant une partie dans laquelle est diffusée une concentration d'impuretés, caractérisée en ce que chacune desdites formes des éléments piézorésistifs (10, 12; 14, 16) comporte une partie (22, 24; 26, 32; 28, 30) réalisée par diffusion avec une faible concentration d'impuretés et une partie (34, 36, 38; 40, 42; 44, 46, 48; 50, 52) réalisée par diffusion avec un fort dopage, ces parties étant raccordées en série, ladite partie à faible concentration en impuretés possédant un coefficient de température de résistance supérieur á celui de la partie fortement dopée, et que la valeur résistive de la partie (22, 24; 28, 30) réalisée par diffusion avec une faible concentration en impuretés dans l'une des formes desdits éléments piézorésistifs (10, 14) est supérieure à celle de la partie (26, 32) réalisée par diffusion avec une faible concentration d'impuretés dans l'autre forme desdits éléments piézorésistifs (12, 16) de sorte que lesdites deux formes d'éléments piézorésistifs (10, 12; 14, 16) possèdent des coefficients de température de résistance globale qui sont différents, le coefficient de température de résistance globale de l'une desdites formes d'éléments piézo-électriques (10, 14) étant supérieur au coefficient de température de résistance globale de l'autre desdites formes d'éléments piézorésistifs (12, 16).

2. Jauge extensométrique à semiconducteurs selon la revendication 1, caractérisée en ce qu'elle comporte quatre éléments piézorésistifs (10, 12, 14, 16) qui sont formés dans ladite surface principale (18) dudit substrat semiconducteur (20) dans une position périphérique sur ledit diaphragme (72) sensible à la pression, lesdits quatre éléments étant accouplés ensemble de manière à former un circuit en pont électrique comportant un premier bras (10), un second bras (12), un troisième bras (14), et un quatrième bras (16), qui comportent chacun l'un desdits éléments, lesdits premier et troisième bras (10, 14) étant situés à l'opposé l'un de l'autre et lesdits second et quatième bras (12, 16) étant situés à l'opposé l'un de l'autre, et que la résistance des parties diffusées respectives de chacun desdits éléments dans lesdits quatre bras (10, 12, 14, 16) est réglée de manière que l'ensemble des bras possèdent des résistances sensiblement égales, et le coefficient de température de résistance desdits premier et troisième bras (10, 14) sera supérieur au coefficient de température de résistance desdits second et quatrième bras (12, 16).

3. Jauge extensométrique à semiconducteurs selon la revendication 1 ou 2, caractérisé en ce que l'une desdites formes d'éléments piézorésistifs (10, 14) comporte un élément en forme de U possédant deux desdites parties diffusées avec une faible concentration d'impuretés (22, 24; 28, 30), qui sont accouplées ensemble par l'intermédiaire d'une partie diffusée à fort dopage (38; 48) et que ladite autre forme d'éléments piézorésistifs (12, 16) comporte un élément en forme de U possédant deux desdites parties diffusées à fort dopage (40, 42; 50, 52) accouplées entre elles par une partie diffusée à faible concentration d'impuretés (26; 32).

4. Dispositif de mesure de contraintes incluant une jauge extensométrique à semiconducteurs conforme à l'une quelconque des revendications 1 à 3.

**Patentansprüche**

1. Halbleiter-Dehnungsmesser mit:
einem Halbleitersubstrat (20) eines Leitfähigkeitstyps, auf dem eine druckempfindliche Membran (72) ausgebildet ist und
zwei Formen von Piezowiderstandselementen (10, 12; 14, 16), die in einer Hauptfläche (18) des Halbleitersubstrats (20) in einem Randbereich der druckempfindlichen Membran (72) ausgebildet sind, einen zum Leitungsfähigkeitstyp des Substrats (20) entgegengesetzten Leitfähigkeitstyp, im wesentlichen denselben Gesamtwiderstand und einen mit einem Fremdstoff dotierten Diffusionsbereich aufweisen, dadurch gekennzeichnet, daß jede Form der Piezowiderstandselemente (10, 12; 14, 16) einen Diffusionsbereich (22, 24; 26, 32; 28, 30) geringer Fremdstoffkonzentration und einen hochdotierten Diffusionsbereich (34, 36, 38; 40, 42; 44, 46, 48; 50, 52), die in Reihe geschaltet sind, aufweist, wobei der Bereich geringer Fremdstoffkonzentration einen höheren Widerstandstemperaturkoeffizienten als der Bereich hoher Fremdstoffkonzentration hat, und daß der Widerstandswert der Diffusionsbereichs (22, 24; 28, 30) geringer Fremdstoffkonzentration der einen Form der Piezowiderstandselemente (10, 14) größer ist als der des Diffusionsbereichs (26, 32) geringer Fremdstoffkonzentration der anderen Form der Piezowiderstandselemente (12, 16), und daß

der Widerstandswert des hochdotierten Diffusionsbereichs (34, 36, 38; 44, 46, 48) der einen Form der Piezowiderstandselemente (10, 14) kleiner als der des hochdotierten Diffusionsbereichs (40, 42; 50, 52) der anderen Form der Piezowiderstandselemente (12, 16) ist, so daß die zwei Formen der Piezowiderstandselemente (10, 12; 14, 16) ungleiche Gesamtwiderstandstemperaturkoeffizienten haben und der Gesamtwiderstandstemperaturkoeffizient der einen Form der Piezowiderstandselemente (10, 14), größer als der Gesamtwiderstandstemperaturkoeffizient der anderen Form der Piezowiderstandselemente (12, 16) ist.

2. Halbleiter-Dehnungsmesser nach Anspruch 1, dadurch gekennzeichnet, daß er vier Piezowiderstandselemente (10, 12, 14, 16) aufweist, die in der Hauptfläche (18) des Halbleitersubstrats (20) im Randbereich der druckempfindlichen Membran (72) ausgebildet sind und miteinander zu einer elektrischen Brückenschaltung mit einem ersten (10), zweiten (12), dritten (14) und vierten (16) Arm, die jeweils eines der Elemente enthalten, verbunden sind, wobei der erste und dritte Arm (10, 14) einerseits und der zweite und vierte Arm (12, 16) andererseits einander gegenüberliegen, und daß der Widerstand der jeweiligen Diffusionsbereiche jedes Elements der vier Arme (10, 12, 14, 16) so ausgebildet ist, daß alle Arme im wesentlichen denselben Widerstandswert haben, jedoch der Widerstandstemperaturkoeffizient des ersten und dritten Arms (10, 14) größer al der Widerstandstemperaturkoeffizient des zweiten und vierten Arms (12, 16) ist.

3. Halbleiter-Dehnungsmesser nach Anspruch 1 oder 2, dadurch gekennzeichnet, daß die eine Form der Piezowiderstandselemente (10, 14) ein U-förmiges Element mit einem Paar der Diffusionsbereiche (22, 24; 28, 30) geringer Verunreinigungskonzentration, die durch einen hochdotierten Diffusionsbereich (38; 48) miteinander verbunden sind und daß die andere Form der Piezowiderstandselemente (12, 16) ein U-förmiges Element mit einem Paar hochdotierter Diffusionsbereich (40, 42; 50, 52) aufweist, die miteinander durch einen Diffusionsbereich (26; 32) geringer Fremdstoffkonzentration verbunden sind.

4. Dehnungsmesseinreichtung, dadurch gekennzeichnet, daß sie einen Halbleiter-Dehnungsmesser gemäß einem der Ansprüche 1 bis 3 aufweist.

FIG. 1

FIG. 2

## FIG. 3

## FIG. 4